# EUROPEAN PATENT APPLICATION

(11) **EP 4 733 976 A1**
(43) Date of publication of application: **29.04.2026**
(21) Application number: 24275111.3
(22) Date of filing: 24.10.2024
(51) Int. Cl.: G06F 30/15, B63B 71/00, G06F 30/28, B63B 71/10, G06F 111/06, G06F 119/14

(54) **OPTIMISING AQUATIC VESSEL PARTS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computing device and a computer-implemented method of optimising a shape of an aquatic vessel part are provided. The method comprises obtaining (202) design data representing an initial 3D shape of an aquatic vessel part, and obtaining (204) a plurality of optimisation datasets, wherein the plurality of optimisation datasets relate to a respective plurality of performance areas of an aquatic vessel part. The method further comprises providing (206) the design data and the plurality of optimisation datasets to a shape optimisation application configured to generate output data representing an updated 3D shape of the aquatic vessel part optimised based on the plurality of optimisation datasets, and processing (208) the output data generated by the shape optimisation application.

## Description

### FIELD OF THE INVENTION

The present invention relates to aquatic vessels, and in particular to designing, optimising and/or forming parts of aquatic vessels.

### BACKGROUND

Different methods of designing and optimising the shapes of parts, including aquatic vessel parts, are known. Shape optimisation analysis typically aims to find a shape/geometry that is optimal in that it minimizes a certain cost functional while simultaneously satisfying given constraints and performance requirements. Traditional shape optimisation is heavily reliant on subject matter expert judgment and typically involves creating a model of the part using a suitable tool, such as a Computer Aided Design application, and analysing several combinations of design factors using techniques including regression and first principles. Computational Fluid Dynamics (CFD) analysis may then be performed for a chosen design and the results may be analysed using a scoring matrix and the like. The shape of the part may then be based on this analysis. Traditional shape optimisation may suffer from limited design space and large timescales for a small number of design iterations.

There are also known optimization techniques that use Artificial Intelligence. For example, a large number of CFD cases may be run and used to train a neural network. The neural network can then be interrogated for a design having a minimal/optimal score so that a vessel part with corresponding suggested parameters can be generated. The chosen design may then be validated using CFD. Other known optimization techniques are based on the use of optimisation software to create a model and use an algorithm, such as T-Search, to modify baseline parameters of the part. A score for a particular performance area, such as resistance, can be calculated for each generated design and the T-Search algorithm is used to test directions and evaluate the impact of changes. The best parameter directions are found and more designs can be tested in that direction so that the optimal shape of the part may be found after several iterations and CFD validation.

However, these known optimisation techniques have disadvantages as optimisation tends to only be focused on bettering one performance area and this may come at the detriment of another. None can optimise an aquatic vessel part design over multiple different performance areas (e.g. barehull resistance, stability, seakeeping, etc) simultaneously, which results in several individual optimisation iterations having to be performed and inefficient designs. There is therefore a need to evolve with the advancement of modern technology in order to improve aquatic vessel part design processes and toolsets.

### SUMMARY

Embodiments of the present invention can address one or more of the above technical problems. Embodiments can provide a holistic vessel/part design optimisation method that can produce more efficient designs in terms of performance, cost and environmental emissions.

According to a first aspect of the present invention there is provided a computer-implemented method of optimising a shape of an aquatic vessel part, the method comprising:
obtaining design data representing an initial 3D shape of an aquatic vessel part;
obtaining a plurality of optimisation datasets, wherein the plurality of optimisation datasets relate to a respective plurality of performance areas of an aquatic vessel part;
providing the design data and the plurality of optimisation datasets to a shape optimisation application configured to generate output data representing an updated 3D shape of the aquatic vessel part optimised based on the plurality of optimisation datasets, and
processing the output data generated by the shape optimisation application.

The plurality of performance areas may be selected from a set comprising: resistance (of the part), intact stability and seakeeping. The set may further comprise: damage stability (of the part), manoeuvring, structures and signatures.

The generating output data representing the updated 3D shape of the aquatic vessel part optimised based on the plurality of optimisation datasets may comprise the shape optimisation application interacting with a respective plurality of external software modules, wherein each of the external software modules may be configured to perform analysis of the aquatic vessel part in relation to the performance area of the corresponding optimisation dataset.

Each of the plurality of optimisation datasets may include a reference to one of the external software modules. The shape optimisation application may interact with the plurality of external software modules by transferring parametric data. The analysis relating to the performance area may produce data useable (e.g. as design parameters) by the shape optimisation application to generate the updated 3D shape of the aquatic vessel part.

Multiple iterations of the performance area analysis and the optimisation by the shape optimisation application may be performed. The updated output data representing the updated 3D shape of the aquatic vessel part may be used as input for a subsequent iteration of the performance area analysis.

The method may comprise configuring the shape optimisation application to perform multi-objective optimisation to generate the updated 3D shape of the aquatic vessel part based on (some or all of) the plurality of parameter data sets simultaneously. A respective plurality of weightings may be assigned to the plurality of performance areas, e.g. to assist identification using a scoring matrix of an optimal 3D shape of the aquatic vessel part.

Each of the plurality of optimisation datasets may specify one or more of: a location of the external software module; a location of a design to be used by the external software module; a name of a geometry in the design data to be analysed; a location of scripts/code to be executed by the external software module; values of input variables to be set, and/or names of values calculated by the external software module to be output.

The aquatic vessel part may comprise a hull or hullform of an aquatic vessel.

The processing the output data may comprise using the output data to form/manufacture (of to control forming/manufacturing of) a part of an aquatic vessel.

According to an alternative aspect of the present invention there is provided a computer-implemented method of optimising a shape of an aquatic vessel part, the method comprising:
obtaining design data comprising an initial design (e.g. 3D shape/geometry) of an aquatic vessel part and design parameters;
using a shape optimisation application to generate an optimised design of the aquatic vessel design based on the design data;
analysing the optimised design in terms of a plurality of performance areas using a respective plurality of software modules external to the shape optimisation application, and
using results of the analysing as updated design parameters in a subsequent iteration of optimisation performed by the shape optimisation application.

According to an alternative aspect of the present invention there is provided a method of (and a device configured to) forming/manufacturing an aquatic vessel part substantially as described herein. According to another aspect of the present invention there is provided an aquatic vessel part designed/formed using a method substantially as described herein. According to yet another aspect of the present invention there is provided an aquatic vessel including at least one part designed/formed using a method substantially as described herein.

According to another aspect of the present invention there is provided a computing device configured to optimise a shape of an aquatic vessel part. The device can comprise at least one processor configured to execute a method substantially as described herein. For example, the processor may be configured to:
obtain design data representing an initial 3D shape of an aquatic vessel part;
obtain a plurality of optimisation datasets, wherein the plurality of optimisation datasets relate to a respective plurality of performance areas of an aquatic vessel part;
provide the design data and the plurality of optimisation datasets to a shape optimisation application configured to generate output data representing an updated 3D shape of the aquatic vessel part optimised based on the plurality of optimisation datasets, and
process the output data generated by the shape optimisation application.

According to a further aspect of the present invention there is provided a system including apparatus for forming/manufacturing of an aquatic vessel part. The system may be configured to receive the output data generated by a computing device substantially as described herein.

According to a further aspect of the present invention there is provided a computer readable medium, or circuit, storing a computer program to operate a method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of a computing device configurable to execute embodiments;
Figure 2 schematically illustrates example steps performed by an embodiment;
Figure 3 schematically illustrates a plurality of performance areas that may be analysed by embodiments, and
Figure 4 schematically illustrates example steps performed by an application configured to control a Paramarine^{™} software module for performance area analysis in some embodiments.

### DETAILED DESCRIPTION

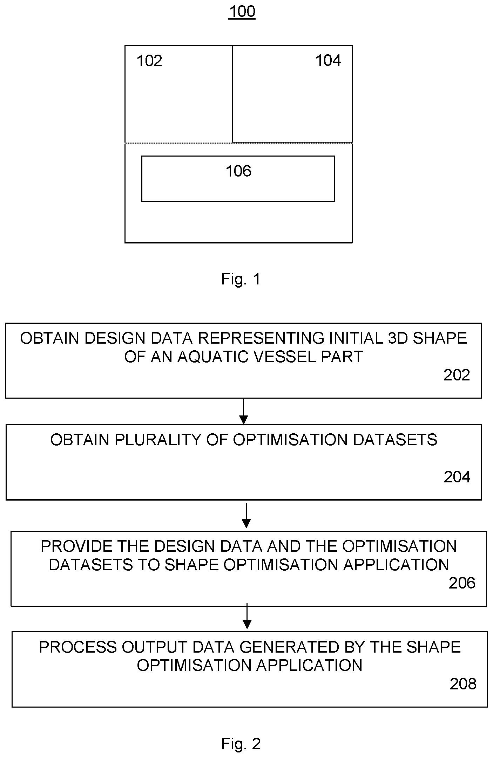

Figure 1 is a simplified block diagram of an example computing device 100 configurable to execute embodiments of the invention. The device 100 will normally comprise, or be associated with, at least one processor 102, memory 104 and a communications interface 106. The at least one processor 102 may comprise one or more of: a microprocessor, a microcontroller and an integrated circuit. The memory 104 may comprise volatile memory, such as random access memory (RAM), for use as temporary memory, and/or non-volatile memory, such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like.

Other components and features of the device 100, such as a housing, power source/supply, display, audio output, user interface, etc, will be well-known to the skilled person and need not be described herein in detail. More than one computing device in communication with each other may be used in some embodiments. For example, one or more of the steps of the methods described herein may be performed by a remote computing device, such as a server or a cloud service, that may be in communication with the device 100.

Figure 2 is a diagram that schematically illustrates steps performed by an example embodiment. At least some of the steps may be performed by instructions being executed by the computing device 100. In a typical scenario the steps will be initiated and controlled by a user who wishes to optimise the shape of a part of an aquatic vessel. It will be understood that embodiments can be implemented using any suitable software, programming language, data editors, etc, and may be represented/stored/processed using any suitable data structures. It will also be understood that the steps described herein as part of the detailed embodiments may be re-ordered, omitted and/or repeated. Additional steps may also be performed. Some steps may be performed concurrently instead of sequentially.

The aquatic vessel may comprise any type of surface vessel (a nonlimiting list of examples includes a frigate, corvette, patrol ship, destroyer and support ship) or submarine. In the main example described herein the aquatic vessel part comprises a hullform of a surface ship. A hullform can comprise an outer shape of a hull of an aquatic vessel that is streamlined to satisfy requirements, such as deadweight, ship speed, and so on. However, it should be understood that other types of aquatic vessel parts can be optimised by alternative embodiments.

At step 202, design data representing at least an initial 3D shape/geometry of an aquatic vessel part is obtained. The design data may be retrieved from a storage device, or may be at least partly created by a user using a suitable application, such as a CAD application or a shape optimisation application. A shape optimisation application provides the ability to set numerous design variables (e.g. having defined upper and lower bounds) to allow rapid generation of a shape (e.g. the aquatic vessel part) that meets the design variables. In some embodiments the known shape optimisation application CAESES(RTM) produced by Friendship Systems of Potsdam, Germany, can be used, which allows for 3D CAD designs (including aquatic vessel parts, such as hullforms) to be modelled parametrically. Parametric modelling is a CAD modelling process whereby the geometry is described as a number of parameters, such as dimensions and angles, that when altered automatically result in the geometry being updated without the user having to redraw individual elements. Although the detailed embodiment described herein uses CAESES(RTM), it will be understood that a different shape optimisation application (e.g. HEEDS^{™} produced by Siemens Digital Industries Software of Plano, USA) can be used in alternative embodiments.

The obtained design data/model may include further information relating to the hullform. For example, in some embodiments the obtaining of the design data at the step 202 may involve creating a baseline parametric model of the hullform in CAESES(RTM), which can define a range of variable design parameters, design constraints by project and/or offer automatic modification of hullform sections and buoyancy distribution to achieve target displacement at a specific draught and Longitudinal Centre of Buoyancy (LCB) that is constraint-defined.

At step 204 a plurality of optimisation datasets are obtained, where the plurality of optimisation datasets relate to a respective plurality of (unique/different/individual) performance areas/aspects (e.g. resistance, seakeeping, stability, etc) of an aquatic vessel part. Each optimisation dataset can include information relating to constraints that a shape/design of a part should meet with regard to the specific type of performance area. The datasets may be retrieved from a storage device, or may be created/selected by a user using any suitable application. Detailed examples are given below.

Examples of performance areas for a hullform include: barehull resistance, intact stability, seakeeping, damage stability, manoeuvring, structures and signatures. It will be understood that these examples can vary for a hullform, and also that alternative performance areas may be used in relation to other types of aquatic vessel parts. For example, for a typical warship such as a frigate, the hull may be optimised for all performance areas (resistance, stability, seakeeping, manoeuvring, structures, signatures) to lead to an efficient design that meets all requirements. In contrast, in the case of a racing yacht, resistance would be the priority in terms of optimisation to achieve higher speed performance. For a cruise ship design, there may be a greater focus on optimisation for stability and seakeeping performance areas to meet passenger comfort requirements. For a cargo vessel there may be a desire to perform analysis in the alternative performance area of internal volume, where it should be maximised to increase carrying capacity.

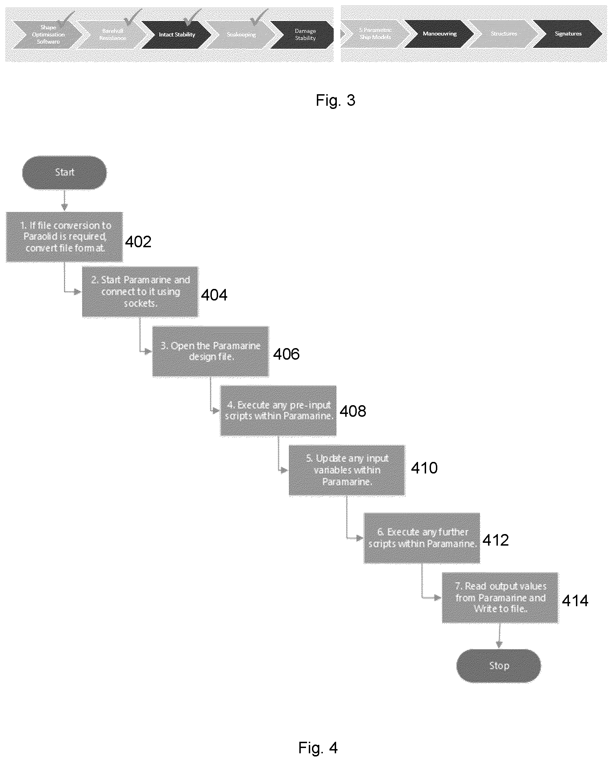

Figure 3 is a diagram schematically illustrating the performance areas for which the shape of an aquatic vessel part may be optimised by some embodiments. It will be appreciated that the illustrated performance areas are exemplary and that some may be omitted and/or additional ones included in alternative embodiments. The plurality of performance areas in the example comprises: resistance, intact stability, seakeeping, damage stability, manoeuvring, structures and signatures. Damage stability optimisation can comprise optimising internal watertight bulkhead positioning. Embodiments may also assign weightings to each of the optimisation performance areas within shape optimisation applications such as CAESES(RTM) (for example, a higher weighting may be assigned for seakeeping performance than resistance) to allow for tailoring of the optimisation results based on design requirements and platform use. For example, a scoring matrix can be used, where weightings are assigned to each of the performance areas to assist identification of the most optimal design, e.g. based on the platform capability, function and requirements, in combination with the scoring matrix. Embodiments may also provide parametric ship design models (e.g. frigate, corvette, patrol ship, destroyer, and support ship) within CAESES(RTM), which can be used as a starting point for optimisation of designs. Guidance on how to connect software, set-up, and perform optimisations for each of the performance areas may also be provided for users.

Each obtained optimisation dataset may include information regarding a simulation/analysis process to be performed in relation to the specific performance area. The simulation/analysis process may be performed by a software module/code/application that is external to, and interacts with, the shape optimisation application. This allows third parties to provide analysis and simulation toolsets (not normally offered by the (unmodified) shape optimisation application) that can be integrated with it to analyse particular designs of a parametric model, or to conduct an optimisation for a defined set of design variables. The obtaining of the optimisation datasets may include providing/installing the datasets on a (local or remote) computing device ready for interaction with the shape optimisation application. Some embodiments can use the in-built 'Connect' workspace feature of CAESES(RTM) to link to an external software module (which may be referenced by a corresponding optimisation dataset) that performs the analysis. In some embodiments the 'Connect' feature of CAESES(RTM) can be used to integrate some/all of the following types of performance area analysis:
1. A parametric Star-CCM+^{™} file to assess barehull resistance of the hullform using CFD.
2. A parametric Paramarine^{™} file to assess intact stability of the hullform.
3. A parametric Paramarine^{™} file to assess seakeeping of the hullform.

Star-CCM+^{™}, produced by Siemens Digital Industries Software, is a multiphysics CFD software that enables CFD engineers to model the complexity and explore the possibilities of products operating under real-world conditions. Paramarine^{™}, produced by QinetiQ Group PLC of Farnborough, UK, is an integrated design and analysis software product capable of dealing with surface and underwater vessel design. The skilled person will appreciate that these applications are merely exemplary and alternatives can be used.

To enable the above, in embodiments template STAR-CCM+^{™} and Paramarine^{™} files have been created parametrically by the present inventors to enable performance areas to be assessed for numerous iterations of designs. Input, initialisation and output scripts have also been developed in order to facilitate the analysis being performed with CAESES(RTM). The optimisation datasets can comprise these files/scripts, which may be obtained from local or remote storage, or created/selected by a user on demand. The optimisation datasets can effectively define optimisation inputs (e.g. resistance, seakeeping, stability, etc) and the user may review the script files and update the input values if needed, as well as review the parametric models/files and update those input values as required.

The performance areas may in some cases be ranked in the order of importance shown below (which may correspond to optimisation datasets that the user will select/obtain):
1. Resistance: The improvement of resistance has a significant number of advantages to other areas of ship design, such as performance (improved speed, greater range due to lower fuel consumption) and reduced costs due to less installed power required to meet the required performance.
2. Seakeeping: Improvement in seakeeping performance increases platform adaptability and capability.
3. Intact Stability: Intact stability is achieved by meeting the stability standards criteria. An improvement in intact stability would allow a greater margin against the criteria limits. Improved stability also leads to a reduction in the need for solid ballast to pass criteria, consequently leading to less weight and therefore improved hydrodynamic performance (speed, range etc.)

In some embodiments this 'holistic' optimisation process can include additional performance areas, such as one or more of: damage stability, manoeuvring, signatures, structures and signatures of the aquatic vessel/part. The skilled person will be able to produce optimisation datasets suitable for these performance areas based on at least the examples of intact stability and seakeeping performance areas given herein. It should be noted that damage stability can also be a driver for internal subdivision (general arrangement, bulkhead positions etc.) and so in some cases may be ranked second, behind resistance optimisation. An improvement in damage stability limiting KG will allow for a greater margin against damage stability requirements which consequently allows for an increase in flexibility for the platform in terms of payload (de-risking the design to change). The order is also subject to specific project requirements and capability needs and so may vary depending on the platform.

At step 206 the design data and the plurality of optimisation datasets are provided to the shape optimisation application, e.g. loaded and instructed for processing by CAESESO according to user input. With the connections, a Multi-Objective Optimisation (an in-built CAESES^{®} feature) can be performed by embodiments to allow a design to be optimised for the multiple performance areas simultaneously. The performance area analysis results can be exported from the external software modules and used as design parameters to be evaluated by the optimisation process performed by the shape optimisation application. Multiple iterations of the performance area analysis and the optimisation may be performed, with the updated output data generated by an iteration of the optimisation being used as input for the performance area analysis at the next iteration, and the output of those performance area analysis being used for the next iteration of the optimisation, and so on. Also, the updated output data from one optimisation area can be used as input into another (e.g. the intact limiting KG from the stability optimisation may be used as an input into the seakeeping optimisation).

In practice, the step 206 may involve optimisation set-up within CAESES^{®} by the user, which can comprise selecting the Optimisation Type (Multi-Objective) and setting Optimisation Evaluation Objectives (e.g. minimise resistance, maximise intact limiting KG (vertical centre of gravity), maximise seakeeping overall hull design score, etc) prior to instructing the shape optimisation application to run its optimisation. The user may also define any optimisation parameters (e.g. the number of iterations, population size, etc) as needed. In a typical embodiment, a user can select a plurality of predefined optimisation datasets from a menu or the like of the shape optimisation application. Thus, the user effectively configures/instructs the shape optimisation application to execute optimisation of the aquatic vessel part based on the plurality of obtained optimisation datasets so that it can generate output data representing an updated (and normally at least partially optimised) 3D shape of the aquatic vessel part.

At step 208, the output data generated by the shape optimisation application is processed. This may involve storing the output data and/or transferring it to another device. Additionally or alternatively, the processing may include using the output data (or data derived from it) to directly control a system that forms/manufactures the aquatic vessel part. Physical parts or test models may be manufactured using additive manufacturing (i.e. 3D printing) or similar technologies.

Other processing that can be performed at the step 208 (or subsequently) may include: review and interrogation of the optimisation results; selection of most 'optimal' hullform design, and/or validation (if required), e.g. by means of CFD, SEACAL, Model Tests, etc. The selection may be made by analysing the output data and selecting the design with the best combined performance across multiple domains that also best meets the design brief, e.g. a corvette vessel design option from a set of options may have the best stability and seakeeping performance but very high resistance which impacts its maximum possible speed and therefore cannot meet the design brief. As a result, the design with a lower resistance but perhaps poorer stability and seakeeping performance may be selected instead because it holistically meets the brief and intended purpose of the vessel to a greater degree.

Figure 4 is a flowchart showing the operational sequence that a Paramarine^{™} connector application/software tool developed by the present inventors may follow to establish the connection between CASES(RTM) and Paramarine^{™} and execute the required performance area analysis. The Paramarine^{™} connector tool can connect CASES(RTM) to Paramarine^{™} for performance area analysis (e.g. stability and seakeeping) in some embodiments. The Paramarine^{™} connector tool effectively acts as a go-between application that connects CAESES(RTM) to Paramarine^{™}, controlling the running of the Paramarine^{™} application that performs the analysis and being responsible for passing data to and from it. It will be appreciated that a similar connection application for integrating CAESES(RTM) with an alternative application to Paramarine^{™} (e.g. NAPA Designer^{™} or other) and offering the same type of functionality and performance area analysis can be produced by the skilled person.

Control of the Paramarine^{™} connector is governed using an input file (that may be fully/partially considered one of the plurality of optimisation datasets) that can specify: the location (e.g. file path or memory address) of the Paramarine^{™} application; the location of the Paramarine^{™} design file; the name of the geometry/design data to be used; the location of any scripts to be run in Paramarine^{™}; the values of any input variables to be set, and/or the names of any values calculated in Paramarine^{™} that should be output. In some embodiments the input file comprises a comma separated values (CSV) format file that contains all the information required to perform the analysis required by CAESES(RTM). This file can be easily edited using either Microsoft Excel^{™} or other text editor. An example format of the input script file is shown below, which relates to Paramarine^{™} (e.g. for the seakeeping or stability performance area):

| | **Row** | **Column 1** | **Column 2** |
|---|---|---|---|
| | 1 | Paramarine^{™} Location | Full path to the Paramarine^{™} executable file. |
| | 2 | Paramarine^{™} Executable | The name of the Paramarine^{™} executable file. |
| | 3 | Paramarine^{™} Design File | The filename of the Paramarine^{™} design file to be used for the analysis. |
| | 4 | Geometry File | The filename of the geometry file. Ideally this will be in Parasolid format, but a STEP format file can be used. |
| | 5 | Parasolid Object | Name of the object into which the geometry is to be loaded. |
| | 6 | Create Parasolid File | 'True' if the geometry needs to be converted to a Parasolid, otherwise this should be set to 'False'. |
| | 7 | Blank Line | |
| | 8 | Pre Input Scripts | Number of scripts, specified in this file, to be executed within Paramarine^{™} prior to setting input values. |
| | 9 | Name of script to be run, to be used in error messages. | Filename of script to be run. |
| | 10 | Blank Row | |
| | 11 | Input Values | Number of input values specified in this file that need to be set in model. |
| | 12 | Full path of object to be set in Paramarine ^{™}. | Name of object to be set in Paramarine^{™}, (subsequent columns can be used to specify the value and units to be used). |
| | 13 | Blank Line | |
| | 14 | Output Values | Number of output values to be returned from the Paramarine^{™} model. |
| | 15 | Full path of the object to be returned. | Name of object whose value is to be returned. |

In some embodiments the output file is automatically created by the Connector application in CSV format and contains all of the output values requested in the input file. The file is automatically named the same as the input file but with '_out' appended to it. An example format of the output script file is shown in the table below, which again relates to Paramarine^{™} (e.g. for the seakeeping or stability performance area):

| | **Row** | **Column 1** | **Column 2** |
|---|---|---|---|
| | 1 | Input Filename | The filename of the input file used. |
| | 2 | Paramarine^{™} | Folder location of the Paramarine^{™} instance used. |
| | 3 | Paramarine^{™} File | The path and filename of the Paramarine^{™} design file used. |
| | 4 | Blank Line | |
| | 5 | Inputs | Number of inputs that were passed to Paramarine^{™}. |
| | 6 | Path to object which was provided as an input. | Name of object for which value was provided as an input. Subsequent column contain value passed and units used. |
| | 7 | Blank Line | |
| | 8 | Outputs | Number of outputs contained in the file. |
| | 9 | Path to object which is being output. | Name of the object, with subsequent columns containing the value and units. |

Referring to Figure 4, at step 402 a check is carried out as to whether file conversion of at least part of the input (typically the geometry/design data, which may be in another format such as STEP format or Iges) to the Parasolid format used by Paramarine^{™} is required. If so then the conversion is performed using known format conversion techniques. At step 404 the Paramarine^{™} application is started and connected to CAESES(RTM) using the sockets provided by the Connect function.

At step 406 a Paramarine^{™} design file that will be used for the external parametric analysis in relation to the specific performance area is opened within Paramarine^{™}. At step 408 any pre-input scripts within Paramarine^{™} are executed. Pre-input scripts can configure elements within the design file which may or may not include customisations based upon the parameterisation of the geometry being examined. At step 410 any input variables within Paramarine^{™} are updated, i.e. the input variables are automatically taken from the input file and applied to the Paramarine^{™} model. Optionally, at step 412 any further/additional scripts within Paramarine^{™} can be executed. At step 414 the values output by Paramarine^{™} for the performance area analysis can be written to a file that is suitable for loading into CAESES(RTM). The data output by the Paramarine^{™} model can therefore be returned to the shape optimisation application, e.g. in an output file that contains confirmation of the design file used to generate the results, a list of all input variables supplied and a list of the generated outputs, which can be used as design parameters in the optimisation performed by the shape optimisation application.

Additional details for examples of performance area analysis, specifically resistance, intact stability and seakeeping in relation to a hullform, will be given below.

### Resistance (if using CFD):

Shipflow may be used in the optimisation process in the first instance to evaluate barehull resistance on each design iteration of a hullform. Shipflow is an integrated add-on within CAESES(RTM); it is a Potential Flow Solver which calculates wave resistance. If using Star-CCM+^{™} (and a connection to CAESES(RTM), similar to the Paramarine^{™} connector example above) to evaluate each design iteration for the performance area of resistance, some or all of the following inputs may be required for the parametric CFD file to assess barehull resistance: a hullform; beam overall; length overall; depth; displacement; draught; trim; longitudinal centre of gravity; mesh size; ship speed; goal Y+. In addition, the resistance optimisation (if using CFD) may require the following files: the Star-CCM+^{™} parametric design file used for resistance analysis; and the input file that sets up the simulation, runs the analysis, exports results, and controls the operation of the Star-CCM+^{™} connector. In some embodiments the outputs of the resistance optimisation may comprise: if using Potential Flow Solver (i.e. integrated Shipflow), the wave resistance coefficient (~); if using CFD, in this case Star-CCM+, barehull resistance (N).

An aim is to mimic the set-up created by Hull Performance Workflow (an integrated Star-CCM+^{™} add-on), with respect to meshing, analysis settings etc. This was used as an initial starting point in order to make the parametric CFD file. This was completed by inserting a number of inputs as parameters (as described above), and linking all of the geometry parts used (free surface, domain box, volumetric control shapes used for meshing) to be created parametrically based on these inputs with relevant scaling where required in order to replicate the required set-up. In addition to this, automatic linking to inputs was added to define other parameters such as displacement, longitudinal centre of gravity (LCG), and draught to the relevant fields in CFD.

### Outlines of example input files:

### File1: Generic_Hullform_Simulation.sim

The parametric STAR-CCM+^{™} CFD file used for the analysis. In some embodiments the CFD analysis utilises the package Star-CCM+^{™} (version 2020.2) in combination with the Hull Performance Workflow add-on. The CFD computations use the bare hull with mesh refinements in the areas where the flow characteristics are more complex, such as around the stern and bow. The free surface can be modelled using the VOF (Volume of Fraction) and MRF (Moving Reference of Frame) to account for the running sinkage and trim of vessel. The turbulence model used can comprise k-Omega SST. However, the skilled person will appreciate that alternative packages/algorithms can be used for the resistance analysis.

### File2: Generic_Hullform_Macro.kcl

Provides the inputs in order for the '.sim' file to be set-up to define the design, create a parametric mesh, run the analysis, export of results.

### Intact Stability:

In some embodiments the inputs for the Paramarine^{™} model for performing intact stability performance area analysis on a hullform may comprise some or all of the following: a hullform (Parasolid format); water density; vertical centre of gravity for hydrostatics; design draught; minimum and maximum draught and number of draught increments (used for analysis and calculation of hydrostatics); minimum and maximum trim and number of trim increments (used for analysis and calculation of hydrostatics); the locations of main watertight bulkheads, decks, other bulkheads in order to define tanks and compartments; compartment permeabilities; average shell plate thickness (if available); and a wind profile (if available). In addition, the stability analysis may require the following files: the Paramarine^{™} design file (used for stability analysis); the input file that controls the operation of Paramarine^{™} Connector; and the script file that performs the stability analysis. In some embodiments the outputs of the intact stability analysis may comprise some or all of the following: intact limiting KG (m); outputs for seakeeping: displacement (te), vertical centre of gravity (VCG) (in this case this is the Intact Limiting KG (m)), aft perpendicular and forward perpendicular (m). All or some of this information may be included in the optimisation dataset for the performance area of intact stability.

The template stability Paramarine^{™} model can contain an `Inputs' placeholder where the objects are initialised using a macro generated via the macro tool. The inputs are the main parameters that CAESES(RTM) will modify in order to optimise stability (as described above). The template stability model may contain the majority of the structure and objects required for performing intact limiting KG assessments. The macro tool that enables this can have the following main steps: 1: Manually populate input cells; 2: Populate boundary tables to define the planes used in subdivision; 3: Populate the permeability table; 4: Perform the subdivision.

### Outlines of example input files:

### File1:TEMPLATE_Parametric_Model_PM_2020_Update_2_Intact.design

The parametric Paramarine^{™} file used for the analysis. In some embodiments the intact stability analysis coded in the file is based on first principles, such as disclosed in Rawson KJ, Tupper E C., BASIC SHIP THEORY, Volume 1 third edition, Longman Group Limited, 1983 combined with criteria and guidance from naval ship stability standards, such as DefStan. However, the skilled person will appreciate that alternative techniques can be used for the intact stability analysis.

### File3: Stability.kcl

A macro based on an Excel^{™} tool which has been created in order to initialise a Paramarine^{™} design for a stability analysis. In summary, the file does the following: 1. Population of inputs into the Paramarine^{™} model; 2. Defines the planes used in subdivision (to create decks, bulkheads, tanks etc.); 3. Assigns permeabilities; 4. Performs the subdivision

### File2: StabilitylnputData.csv

Specifies where the Paramarine^{™} executable is, the Paramarine^{™} '.design' file and the geometry file. Also specifies the stability `.kcl' to be run. Used to define the outputs from the stability model which act as Inputs into CAESES(RTM).

### Seakeeping:

In some embodiments the inputs for the Paramarine^{™} model for performing seakeeping performance area analysis on a hullform may comprise some or all of the following: a hullform (parasolid format); ship condition; displacement; vertical centre of gravity; aft perpendicular and forward perpendicular; density; assessed seakeeping locations (i.e. personnel locations, helicopter, combat systems, launch and recovery); seakeeping analysis setup: wave frequency range, ship speeds, headings, autopilot controller and/or scoring matrix weightings). In addition, the seakeeping analysis may require the following files: the Paramarine^{™} design file (used for seakeeping analysis); and the input file that sets up the simulation, exports results, controls the operation of Paramarine^{™} Connector. In some embodiments the outputs of the seakeeping analysis may comprise some or all of the following (scores are based on the seakeeping analysis results which incorporate weightings assigned for each criteria set and sea state): Sea State 4 (SS4) Weighted Score (~); Sea State 5 (SS5) Weighted Score (~); Sea State 6 (SS6) Weighted Score (~), and overall hull design score (a total of SS4, SS5 and SS6 weighted scores). All or some of this information may be included in the optimisation dataset for the performance area of seakeeping.

The parametric seakeeping model can include an 'inputs' placeholder containing a list of inputs to be updated for each design (as described above). This is performed through CAESES(RTM) automatically during an optimisation, with input from CAESES(RTM) parameters, the seakeeping input script, and output results from Paramarine^{™} stability performance area analysis (if also assessed). The parametric seakeeping model can have one appendage included (the rudder) along with its controller, which is necessary to produce lateral motions. The appendage geometry and location is automatically generated based on the provided hullform geometry.

### Outlines of example input files:

### File1: Parametric Seakeeping_Model_ Blank_File.design

The parametric Paramarine^{™} file used for the analysis. Embodiments that use Paramarine^{™} can utilise its PAT 2000 Seakeeping module to calculate the seakeeping predictions. The program uses a linear strip theory based method to calculate ship transfer functions for a variety of different spectra, sea states, ship load conditions, speeds and headings. Paramarine^{®} carries out further post processing to calculate the lateral and vertical motions in 5 degrees of freedom (excluding surge), ship and human responses such as Motion Seasickness Incidence (MSI). However, the skilled person will appreciate that alternative techniques can be used for the seakeeping analysis.

### File3: Seakeeping.kcl

Links the imported hullform design in Paramarine^{™} to the relevant areas to enable the seakeeping analysis to be completed (i.e. the solid body (imported hullform) linked to the hydrostatics, loading condition objects etc.).

### File2: Seakeeping_Input_Data.csv

Specifies where the Paramarine^{™} executable, the Paramarine^{™} '.design' file and the geometry file are located. Also specifies the seakeeping `.kcl' to be run. Used to define the inputs and also to define which outputs are required to be exported from the Paramarine^{™} model.

Advantages provided by embodiments can include development of more competitive designs (including exploration of a wider design space); improved design efficiency; improved operational capability; reduction in project risk; improved design margins; contractual requirements are easier to be met/exceeded; reduced emissions (e.g. due to improved resistance), and/or creation pathway for future fuels. Embodiments can also result in reduced costs (CapEx & OpEx), e.g. due to improved resistance leads to reduction in installed power required; lower fuel consumption due to improved resistance performance and/or reduction in engineering cost due to 'streamlined' process, improved timescales and reduction in re-work.

Terms such as 'component', 'module', 'processor' or'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of optimising a shape of an aquatic vessel part, the method comprising:
obtaining (202) design data representing an initial 3D shape of an aquatic vessel part;
obtaining (204) a plurality of optimisation datasets, wherein the plurality of optimisation datasets relate to a respective plurality of performance areas of an aquatic vessel part;
providing (206) the design data and the plurality of optimisation datasets to a shape optimisation application configured to generate output data representing an updated 3D shape of the aquatic vessel part optimised based on the plurality of optimisation datasets, and
processing (208) the output data generated by the shape optimisation application.

2. A method according to claim 1, wherein the plurality of performance areas are selected from a set comprising: resistance of the part, intact stability of the part and seakeeping of the part.

3. A method according to claim 1, wherein the set further comprises: damage stability of the part, manoeuvring of the part, structure of the part and signature of the part.

4. A method according to claim 1, wherein the generating output data representing the updated 3D shape of the aquatic vessel part optimised based on the plurality of optimisation datasets comprises the shape optimisation application interacting with a respective plurality of external software modules, wherein each of the external software modules is configured to perform analysis of the aquatic vessel part in relation to the performance area of the corresponding optimisation dataset.

5. A method according to claim 4, wherein each of the plurality of optimisation datasets includes a reference to one of the external software modules, and wherein the shape optimisation application interacts with the plurality of external software modules by transferring parametric data, wherein the analysis relating to the performance area produces data useable by the shape optimisation application to generate the updated 3D shape of the aquatic vessel part.

6. A method according to claim 5, wherein multiple iterations of the performance area analysis and the optimisation by the shape optimisation application are performed, and the updated output data representing the updated 3D shape of the aquatic vessel part is used as input for a subsequent iteration of the performance area analysis.

7. A method according to claim 4, wherein the method comprises configuring the shape optimisation application to perform multi-objective optimisation to generate the updated 3D shape of the aquatic vessel part based on the plurality of parameter data sets simultaneously.

8. A method according to any preceding claim, wherein a respective plurality of weightings are assigned to the plurality of performance areas to assist identification using a scoring matrix of an optimal 3D shape of the aquatic vessel part.

9. A method according to claim 1, wherein each of the plurality of optimisation datasets specifies one or more of: a location of the external software module; a location of a design to be used by the external software module; a name of a geometry in the design data to be analysed; a location of scripts/code to be executed by the external software module; values of input variables to be set, and/or names of values calculated by the external software module to be output.

10. A method according to claim 1, wherein the processing (208) the output data comprises using the output data to control forming/manufacturing of the part of the aquatic vessel.

11. A method according to claim 1, wherein the aquatic vessel part comprises a hull or hullform of the aquatic vessel.

12. A method according to claim 1, wherein the aquatic vessel comprises a includes a frigate, corvette, patrol ship, destroyer, support ship or submarine.

13. A computing device (100) configured to optimise a shape of an aquatic vessel part, the device comprising at least one processor (102) configured to:
obtain design data representing an initial 3D shape of an aquatic vessel part;
obtain a plurality of optimisation datasets, wherein the plurality of optimisation datasets relate to a respective plurality of performance areas of an aquatic vessel part;
provide the design data and the plurality of optimisation datasets to a shape optimisation application configured to generate output data representing an updated 3D shape of the aquatic vessel part optimised based on the plurality of optimisation datasets, and
process the output data generated by the shape optimisation application.

14. A system including apparatus for forming/manufacturing of an aquatic vessel part, wherein the system is configured to receive the output data generated by the computing device of claim 13 as input.

15. According to a further aspect of the present invention there is provided a computer readable medium, or circuit, storing a computer program to operate a method according to claim 1.
